Europäisches Patentamt

European Patent Office

Office européen des brevets

(19)

(11) Numéro de publication : **0 456 578 B1**

(12)

# FASCICULE DE BREVET EUROPEEN

(45) Date de publication du fascicule du brevet :
**18.08.93 Bulletin 93/33**

(51) Int. Cl.⁵ : **B65G 25/02**

(21) Numéro de dépôt : **91401205.9**

(22) Date de dépôt : **07.05.91**

(54) **Transporteur à barres parallèles.**

(30) Priorité : **09.05.90 FR 9005785**

(43) Date de publication de la demande :
**13.11.91 Bulletin 91/46**

(45) Mention de la délivrance du brevet :
**18.08.93 Bulletin 93/33**

(84) Etats contractants désignés :
**AT BE CH DE DK ES FR GB GR IT LI LU NL SE**

(56) Documents cités :
**EP-A- 0 334 460**
**DE-A- 3 214 999**
**FR-A- 2 221 365**
**US-A- 3 193 088**

(73) Titulaire : **Marceau, Gilbert**
**60, Rue Gagarine**
**F-39100 Dole (FR)**

(72) Inventeur : **Marceau, Gilbert**
**60, Rue Gagarine**
**F-39100 Dole (FR)**

(74) Mandataire : **Bruder, Michel et al**
**Cabinet Michel Bruder Conseil en Brevets 10,**
**rue de la Pépinière**
**F-75008 Paris (FR)**

## Description

La présente invention concerne un appareil transporteur à barres parallèles destiné au déplacement rectiligne de charges, et plus particulièrement de charges lourdes, d'un point à un autre.

On connaît les appareils transporteurs à plancher mobile du type à poutres en mouvement, et notamment celui décrit dans la demande de brevet française FR-2 449 051. Dans ce document, il est décrit un appareil de transport constitué d'une rangée de lattes juxtaposées ; les lattes sont agencées en groupes alternés, chaque groupe étant soutenu à ses extrémités opposées à partir d'un groupe correspondant de rails par deux organes flexibles. Chaque rail est à son tour supporté à ses deux extrémités par deux organes flexibles faisant saillie à partir d'une base commune. Chaque groupe de rail est soumis à un mouvement de va-et-vient par des poussoirs entraînés de façon excentrée ou par d'autres moyens analogues, de sorte que le groupe de rails se déplace suivant un trajet en arc de cercle autour de ses liaisons avec la base. Simultanément, le groupe de lattes correspondant au groupe de rails est également soumis à un mouvement de va-et-vient, de sorte qu'il se déplace lui-même en arc de cercle autour de ses liaisons avec le groupe de rails. Etant donné par ailleurs que les mouvements des rails et des lattes sont effectués en déphasage, leur combinaison procure au groupe de lattes un mouvement orbital par rapport à la base. Par un choix adéquat du déphasage, le trajet d'un groupe de lattes peut ainsi être sensiblement elliptique avec une excentricité très grande ce qui permet de déplacer des objets en appui positif sur le groupe de lattes d'une valeur égale au grand axe de l'ellipse. En déphasant également entre eux les mouvements des groupes correspondants de lattes et de rails, il est possible de faire progresser des objets d'une manière presque continue.

Cet appareil transporteur est particulièrement adapté au transport d'articles petits et fragiles, tels que des puces de silicium, mais on comprend aisément qu'il ne convient pas pour le déplacement de charges lourdes telles que des containers ou bien encore des palettes ; en effet, le mouvement orbital des lattes indique que la charge doit être soulevée en permanence, même faiblement, à chaque étape de son avancement sur le transporteur, ce qui est concevable pour une charge légère mais peu réaliste pour une charge lourde. Sous l'effet du poids, les organes flexibles, reliant d'une part les groupes de lattes aux groupes de rails et d'autre part les groupes de rails à leur base commune, peuvent ainsi ployer, faussant totalement le mouvement orbital ou elliptique des lattes, avec le risque majeur supplémentaire de se rompre. De plus, même en renforçant les organes flexibles, les efforts de soulèvement alternatif d'une charge lourde sont coûteux en énergie et d'autant plus inutiles qu'on veut leur donner un mouvement principalement rectiligne. En outre, un tel transporteur est relativement complexe et comporte un nombre de liaisons mécaniques importants nécessitant des réglages nombreux (déphasages des poussoirs, points d'application des forces, ...) nuisant incontestablement à sa fiabilité.

La présente invention vise à remédier à ces inconvénients en proposant un appareil transporteur à plancher mobile comportant au moins deux jeux alternés de barres parallèles sur lesquelles repose la charge à transporter, cet appareil transporteur étant caractérisé en ce que, d'une part, des organes de liaison et de soutien rigides relient les jeux de barres à deux mécanismes excentriques différents, d'entraxe fixe, tournant normalement dans des sens contrarotatifs autour de leur centre de rotation respectif à des fréquences préférentiellement identiques, de manière à ce que lesdits jeux soient animés alternativement de mouvements respectifs d'avancement et de recul à des niveaux haut et et bas distincts, et en ce que, d'autre part, lesdits organes de soutien sont sollicités vers le haut par des ressorts en appui sur le bâti de l'appareil transporteur amenant alternativement l'organe de soutien correspondant au jeu de barres le plus haut en butée positive contre des appuis inversés fixes de niveau constant.

L'appareil transporteur conforme à l'invention se distingue ainsi des transporteurs à plancher mobile d'une autre catégorie, également connue, dont la surface porteuse est constituée de lattes juxtaposées de même niveau, entraînées par groupe en un mouvement longitudinal alternatif de sorte qu'à un moment donné, le nombre de lattes en cours d'avancement est supérieur à celui de lattes en cours de retrait. Dans ce dernier cas, décrit par exemple dans le brevet américain US-2 973 856, les lattes en retrait frottent sur le dessous des charges transportées ce qui est un inconvénient évident.

Selon l'invention, le jeu de barres en retrait descend au dessous du niveau haut du jeu de barres en cours d'avancement, sans pour autant que ces dernières puissent monter au-dessus d'un niveau haut de référence déterminé par les appuis inversés contre lesquels l'organe de soutien du jeu de barres le plus haut est comprimé, d'une manière élastique, par les ressorts prenant appui sur le bâti. La charge se trouvant en appui positif sur les barres porteuses n'est, par conséquent, jamais soulevée et toute la puissance de l'appareil transporteur est développée pour faire progresser cette charge. Un transporteur à barres parallèles qui présente cette dernière caractéristique est connu par DE-A-3 214 993

La cinématique des deux jeux de barres alternées selon l'invention résulte des mouvements relatifs distincts des barres par rapport à un ensemble mécanique unique - ces mouvements étant procurés par les deux mécanismes excentriques d'entraxe fixe -, cet ensemble mécanique unique étant lui-même mobile élastiquement par rapport au bâti fixe de l'appareil transporteur - grâce aux ressorts coopérant avec les appuis inversés -.

D'autres caractéristiques et avantages de la présente invention ressortiront mieux de la description qui va suivre de deux formes d'exécution d'un appareil transporteur donnés à titre d'exemples non limitatifs de ladite invention en référence aux dessins annexés sur lesquels :

- la figure 1a est une vue en perspective d'un appareil transporteur conforme à l'invention portant une charge lourde du type d'une pallette à pieds,
- la figure 1b est une vue en coupe schématique suivant l'axe A-B de l'appareil transporteur représenté sur la figure 1a,
- les figures 2 à 5 sont des schémas de principe de la cinématique d'une première variante du mécanisme d'avancement des jeux de barres parallèles équipant l'appareil transporteur représenté sur les figures 1a et 1b,
- les figures 6 à 9 sont des schémas de principe de la cinématique d'une deuxième variante du mécanisme d'avancement des jeux de barres parallèles équipant l'appareil transporteur représenté sur les figures 1a et 1b,
- la figure 10 est une courbe schématisant le déplacement du point de connexion de l'organe de liaison rigide reliant le jeu de barres le plus haut au mécanisme excentrique lui correspondant, ce déplacement étant relatif au centre de rotation de ce mécanisme,
- la figure 11 est une représentation approximative de la came coopérant avec une poulie d'appui fixe pour constituer l'un des deux mécanismes excentriques d'entraînement des barres conforme à la deuxième variante.

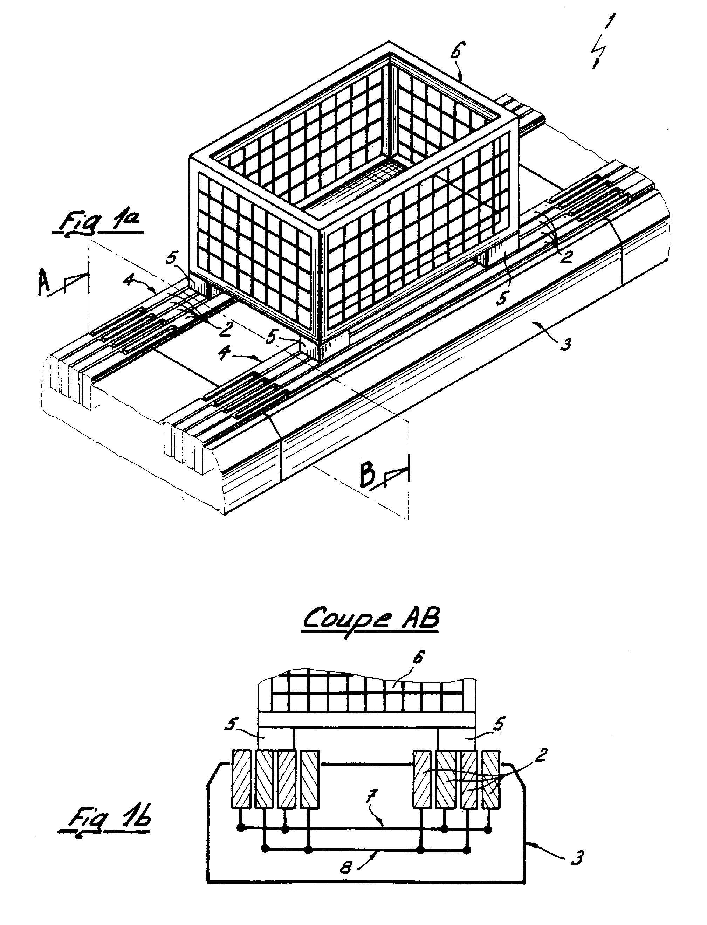

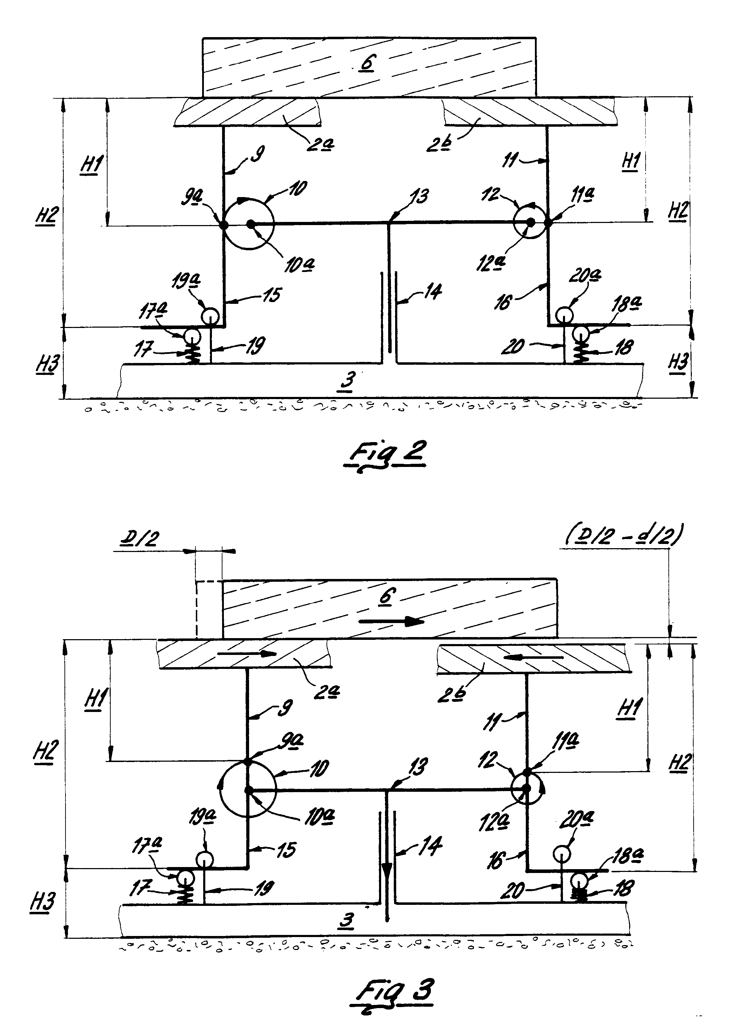

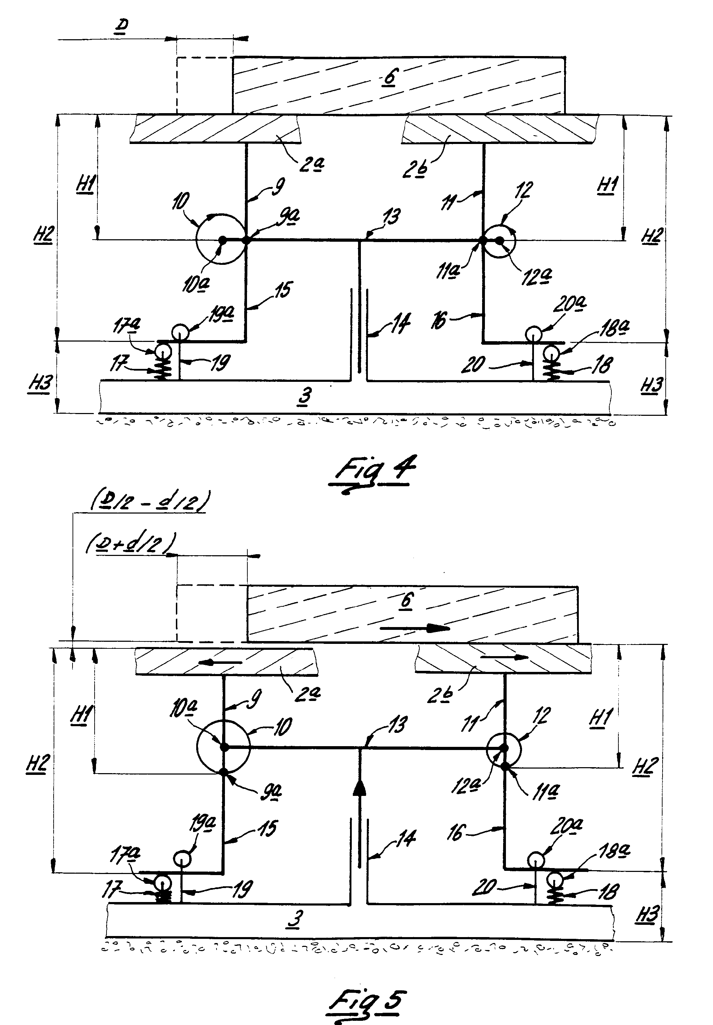

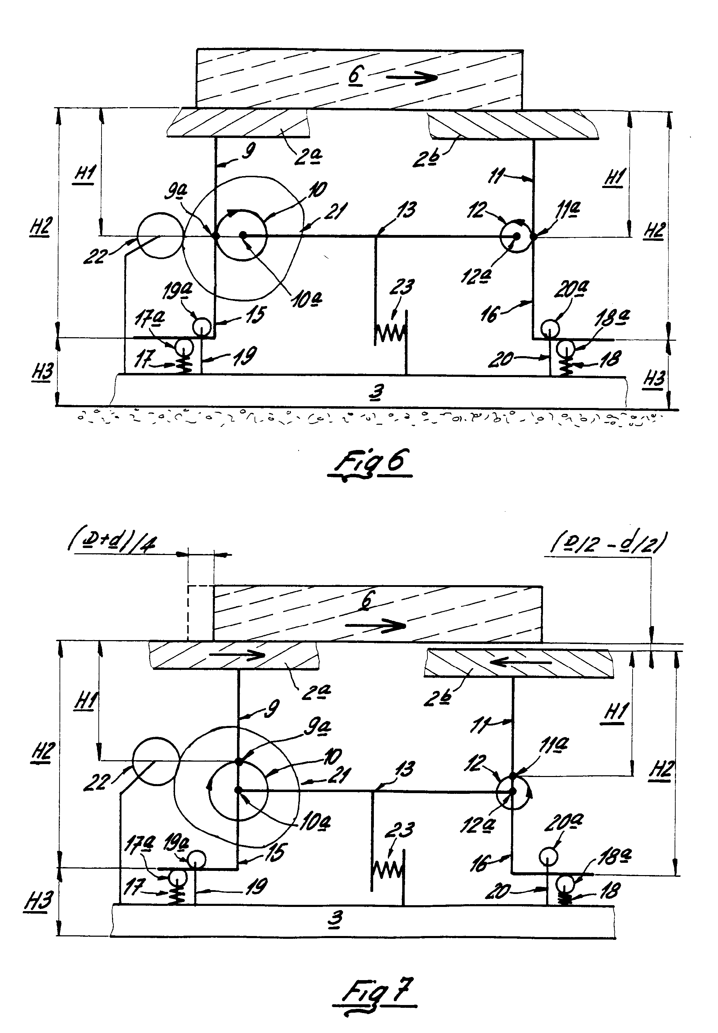

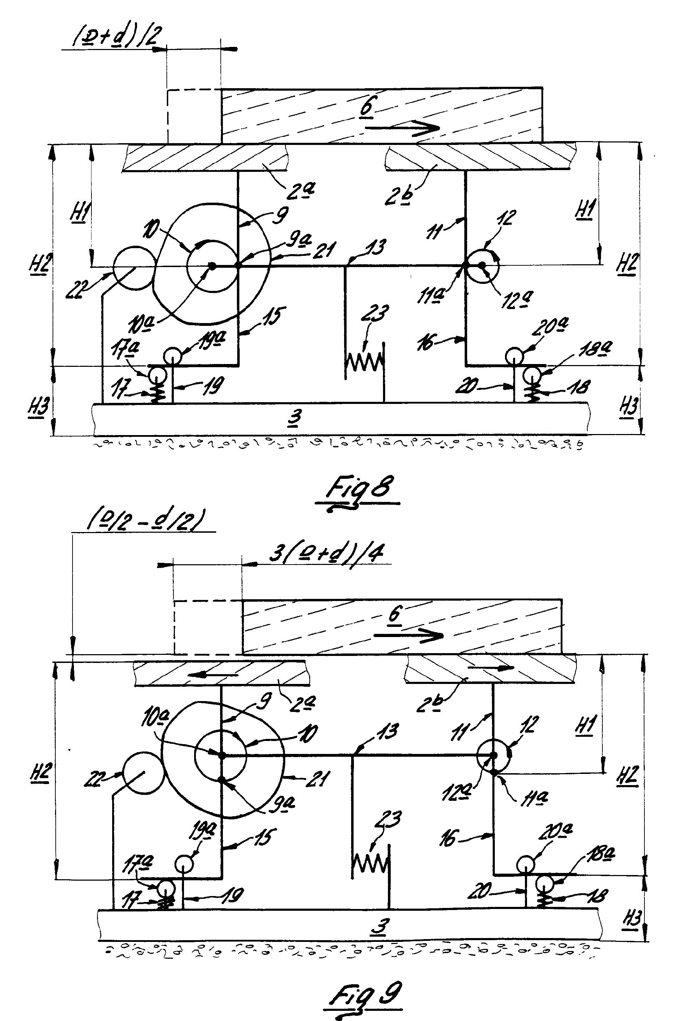

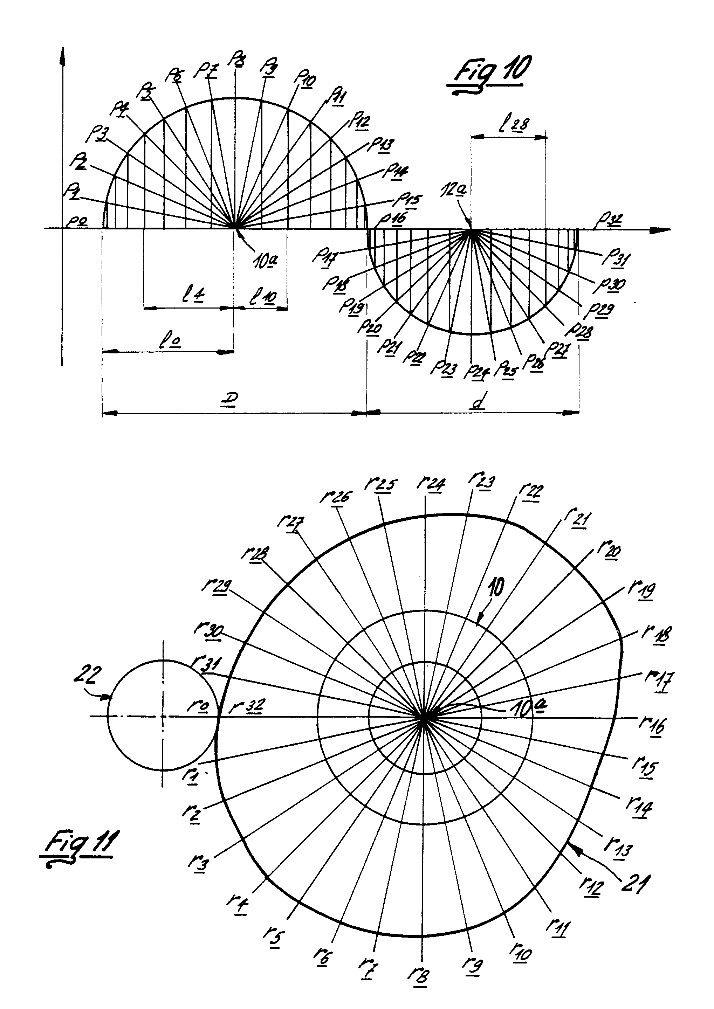

L'appareil transporteur 1 représenté sur la figure 1a comporte un ensemble de barres parallèles 2 agencées sur un bâti 3 en deux groupes afin de constituer deux pistes 4 parallèles, s'étendant longitudinalement, chaque piste 4 supportant les pieds 5 d'une charge 6 du type d'une palette. Cette disposition des barres 2 en deux pistes 4 n'est pas limitative et il est possible de réaliser une unique piste plus large mieux adaptée au transport d'autres charges. Par ailleurs, selon une variante préférée de l'invention représentée sur la figure 1b, les barres 2 sont organisées en deux jeux 7 et 8 intercalés, la charge 6 reposant en permanence par ses pieds 5 en appui positif sur les barres 2 d'au moins un des deux jeux 7 et 8 constitutives des deux pistes 4. Conformément à l'invention, les jeux 7 et 8 assurent un déplacement rectiligne, continu ou intermittent, de la charge 6 qui peut être décrit complètement par le cycle des quatre phases successives suivantes :

a) la charge est en appui sur toutes les barres 2 des deux jeux 7 et 8 qui se trouvent à un même niveau, dit par la suite niveau haut,

b) le jeu 7 est alors animé d'un mouvement d'avancement rectiligne au niveau haut, tandis que les barres 2 du jeu 8 sont escamotées à un niveau dit bas, inférieur au niveau haut, et subissent un mouvement de recul inverse du mouvement du jeu 7 : la charge 6, qui est restée en appui positif sur le jeu 7, avance avec celui-ci de la même distance,

c) en fin de course, le jeu 8 revient au niveau haut tandis que les mouvements antagonistes des deux jeux 7 et 8 s'arrêtent,

d) le jeu 8 est animé d'un mouvement d'avancement rectiligne au niveau haut, tandis que les barres 2 du jeu 7 sont escamotées à un niveau bas en subissant un mouvement de recul inverse de celui du jeu 8 : la charge 6, qui est restée en appui positif sur le jeu 8, avance avec celui-ci de la même distance.

En fin de course, le jeu 7 revient au niveau haut, les deux jeux 7 et 8 retrouvant leur position de la phase a). Puis le cycle recommence, ce qui permet de déplacer la charge 6 sans changement de niveau vertical et sans frottement du jeu des barres 2 en retrait sous la face d'appui des pieds 5 de ladite charge 6.

On décrira maintenant plus en détail un premier mode de réalisation des organes d'entraînement des barres 2 des deux jeux 7 et 8 dont les figures 2 à 5 sont des schémas de principe cinématiques correspondant respectivement aux quatre phases a) à d) du déplacement de la charge 6 exposé précédemment.

Sur toutes ces figures, on a représenté dans un même plan une barre 2a du jeu 7 et une barre 2b du jeu 8, le mouvement d'une seule barre 2 étant représentatif du mouvement de l'ensemble des barres 2 d'un jeu 7 ou 8. Dans la réalité, les barres 2a et 2b ne partagent évidemment pas le même plan mais sont décalées dans des plans verticaux distincts. Elles supportent une charge 6 également représentée sur les figures d'une manière schématique.

Selon le mode de réalisation représenté sur les figures, la barre 2a du jeu 7 est reliée par un organe de liaison 9 rigide à un point de connexion 9a situé sur la circonférence d'un disque 10 de centre 10a et de diamètre D. De cette façon, lorsque le disque 10 tourne dans le sens horaire, le point de connexion 9a de l'organe de liaison 9 a tout d'abord tendance à monter par rapport au centre 10a et à se diriger vers la droite, provoquant l'avancement de la barre 2a ; puis, au fur et à mesure que la rotation du disque 10 se poursuit, le point de connexion 9a redescend en se dirigeant vers la gauche pour revenir à sa position d'origine, provoquant le recul de ladite barre 2a.

De même, la barre 2b du jeu 8 est reliée par un organe de liaison 11, également rigide, à un point de connexion 11a situé sur la circonférence d'un disque 12 de centre 12a et de diamètre d différent de D, ici représenté comme étant inférieur à D. Ainsi, lorsque le disque 12 tourne dans le sens anti-horaire, le point de connexion 11a de l'organe de liaison 11 a tout d'abord tendance à monter par rapport au centre 12a et à se diriger vers la gauche, provoquant le recul de la barre 2b ; puis, la rotation du disque 12 se poursuivant, le point de connexion 12a redescend en se dirigeant vers la droite pour revenir à sa position d'origine, provoquant l'avancement de ladite barre 2b.

Afin d'aboutir à tous les objectifs de l'invention, les centres 10a et 12a des disques 10 et 12 sont maintenus à une distance constante l'un de l'autre par un châssis 13 rigide, préférentiellement horizontal, ne pouvant se déplacer que parallèlement à lui-même dans une glissière verticale 14 solidaire du bâti 3 de l'appareil transporteur 1 ; de cette façon, les centres de rotation 10a et 12a ne peuvent avoir aucun mouvement de translation longitudinal dans la direction d'avancement ou de recul des barres 2a et 2b, mais uniquement un mouvement vertical alternatif qui sera décrit plus loin d'une manière détaillée.

La liaison mécanique des deux ensembles mobiles - constitués par les barres 2a et 2b des deux jeux 7 et 8, les organes de liaison 9 et 11, les disques 10 et 12 et le châssis mobile 13 - avec le bâti 3 de l'appareil transporteur 1 est assurée, en plus de la glissière verticale 14, par des organes de soutien rigides 15 et 16 prolongeant les organes de liaison rigides 9 et 11 vers le bas, ces derniers reposant respectivement, d'une manière flottante et élastique, sur des ressorts 17 et 18 fixés sur ledit bâti 3. Ces ressorts 17 et 18 sollicitent les barres 2a et 2b vers le haut jusqu'à comprimer l'un au moins des deux organes de soutien rigides 15 ou 16 en butée contre l'un au moins de deux appuis inversés 19 et 20 leur correspondant ; ces appuis inversés 19 et 20 sont fixés à une même hauteur H3 sur le bâti 3 de l'appareil transporteur 1. Par conséquent, tout mouvement vers le bas d'un des deux ensembles constitués respectivement par les barres 2a, 2b, les organes de liaison 9, 11 et de soutien 15, 16 provoque la compression du ressort 17 ou 18 lui correspondant, l'autre ensemble étant maintenu en butée haute contre l'appui inversé 20 ou 19 coopérant avec son ressort 18 ou 17 respectif.

On rappelle, en outre, que, les organes de liaisons 9 et 11 reliant les barres 2a et 2b aux disques 10 et 12 étant rigides, il va de soi que les hauteurs desdites barres 2a et 2b par rapport aux points de connexion 9a et 11a desdits organes 9 et 11 sur leur disque 10, 12 respectif demeure constante ; préférentiellement, ces hauteurs sont prises égales entre elles, soit H1. De même, les organes de soutien 15 et 16, également rigides, sont de longueurs fixes et prises préférentiellement égales entre elles ; ainsi, la hauteur H2 des barres 2a et 2b par rapport aux appuis inversés 19 et 20 reste constante. Comme la hauteur H3 de ces derniers par rapport au sol est également constante, on comprend que le jeu 7 ou 8 de barres 2a ou 2b le plus haut à un instant donné se trouve obligatoirement à un niveau haut constant par rapport au sol ; la charge 6 en appui sur les barres 2 ne subit donc aucune variation d'altitude pendant son déplacement.

Bien entendu, étant donné que les mouvements verticaux des barres 2a et 2b, et donc des organes de soutien 15 et 16, s'accompagnent de mouvements horizontaux d'avancement et de recul leur correspondant, les ressorts 17 et 18, ainsi que les appuis inversés 19 et 20, sont munis respectivement de roulements 17a et 18a et de roulements 19a et 20a permettant audits organes de soutien 15 et 16 de se mouvoir sans frottement dans une direction horizontale par rapport au bâti 3.

On comprendra mieux le fonctionnement de l'appareil transporteur 1 à l'aide des schémas 2 à 5. On a vu plus haut que pour obtenir des mouvements antagonistes d'avance et de recul des barres 2a et 2b de deux jeux 7 et 8 différents, il convenait que les disques 10 et 12 tournent normalement en sens inverses, c'est-à-dire dans des sens contrarotatifs. En outre, pour que ces mouvements antagonistes soient correctement synchronisés, et qu'à aucun moment les barres 2a ou 2b en recul ne puissent frotter contre la surface d'appui de la charge 6 sur les pistes 4 (figure 1b) de l'appareil transporteur 1, ces disques 10 et 12 doivent tourner à des fréquences identiques, ce qui n'exclut pas, bien sûr, d'autres modes de fonctionnement. Enfin, dans l'exemple de réalisation schématisé sur les figures 2 à 5, les points de connexion 9a et 11a des organes de liaisons 9 et 11 sur les disques 10 et 12 se trouvent placés en opposition l'un par rapport à l'autre, ceci afin que, malgré la synchronisation des rotations des deux disques 10 et 12, le même inconvénient d'un frottement des barres 2 en recul sous la charge 6 ne se produise.

Sur la figure 2, les barres 2a et 2b se trouvent à un niveau haut par rapport au sol, déterminé par la somme des hauteurs H2 et H3, et supportent une charge 6 immobile (phase a du cycle décrit plus haut). Dans cette position, les points de connexion 9a et 11a des organes de liaisons 9 et 11, reliant les disques 10 et 12 aux barres 2a et 2b respectivement, sont éloignés l'un de l'autre d'une distance maximale égale à l'entraxe des centres 10a et 12b des disques 10 et 12 ajouté de leur demi-diamètre respectif, à savoir D/2 et d/2 ; il va de soi que ceci résulte du fait que lesdits points de connexion 9a et 11a se trouvent placés en opposition l'un par rapport à l'autre mais une autre disposition n'est pas exclue. La hauteur des points de connexion 9a et 11a par rapport au sol est par ailleurs identique, dans la mesure où les barres 2a et 2b se trouvent au même niveau. L'ensemble du mécanisme repose sur les roulements 17a et 18a des ressorts 17 et 18, les deux organes de soutien 15 et 16 se trouvant, pour leur part, en butée positive contre les roulements 19a et 20a des appuis inversés 19 et 20 situés à la hauteur $H3$ par rapport au sol.

Entre la position de la figure 2 et celle de la figure 3, on a provoqué la rotation contrarotative des disques 10 et 12 d'un quart de tour autour de leur centre $10a$ et $12a$ ; la position obtenue correspond à la phase intermédiaire b) du cycle décrit plus haut. Ainsi qu'on l'a déjà expliqué, la rotation synchrone et contrarotative des disques 10 et 12 aurait tendance à faire monter les points de connexion $9a$ et $11a$ par rapport aux centres $10a$ et $12a$, provoquant ainsi le soulèvement respectif des barres $2a$ et $2b$ d'une valeur au maximum égale à $D/2$ pour le disque 10 et à $d/2$ pour le disque 12. Or, du fait que les hauteurs $H2$ et $H3$ sont constantes, aucunes des barres $2a$ ou $2b$ ne peuvent monter car les organes de soutien 15 et 16 dépasseraient leur butée sur les appuis inversés 19 et 20 respectivement ; en conséquence, les centres $10a$ et $12a$ doivent se déplacer vers le bas pour compenser le déplacement vertical que lesdites barres $2a$ et $2b$ ne peuvent effectuer, le premier d'une valeur au moins égale à $D/2$ et le second d'une valeur au moins égale à $d/2$. Comme, par ailleurs, les centres $10a$ et $12a$ sont reliés par le châssis 13 rigide et horizontal qui ne peut justement se déplacer que verticalement dans la glissière 14, les abaissements verticaux desdits centres $10a$ et $12a$ sont identiques et égaux au plus grand déplacement vertical possible, soit $D/2$ (puisque, on le rappelle, $d$ est inférieur à $D$). Cet abaissement simultané des centres $10a$ et $12a$ a pour effet principal de provoquer l'abaissement de l'ensemble lié aux barres $2b$ du jeu 8 au dessous du niveau haut de support de la charge 6 ; à l'inverse, les barres $2a$ du jeu 7 ne subissent aucun abaissement, le ressort 17 jouant ici pleinement son rôle en repoussant l'organe de soutien 15 contre l'appui inversé 19. L'écart maximum entre le niveau des deux jeux 7 et 8 est celui représenté sur la figure 3 ; cet écart vaut exactement $D/2-d/2$. Dans ces conditions, on comprend bien que seules les barres $2a$ du jeu 7 portent la charge 6.

En outre, dans le même temps où le châssis 13 est abaissé jusqu'à son niveau le plus bas, le jeu 7 de barres $2a$ progresse d'une distance égale à $D/2$ correspondant au déplacement horizontal du point de connexion $9a$ de l'organe de liaison 9 reliant lesdites barres $2a$ et le disque 10 ; ce déplacement est parfaitement rectiligne puisque toute tendance à un déplacement vertical est compensée par celui du châssis mobile 13 dans sa glissière 14. De même, le jeu 8 de barres $2b$ qui a été escamoté vers le bas d'une valeur atteignant $D/2-d/2$ à son maximum subit un mouvement de recul inverse du mouvement d'avancement du jeu 7 de barres $2a$, sur une distance égale à $d/2$ l'amenant dans la position de la figure 3.

Il convient également de noter que, dans cette même position intermédiaire, l'organe de soutien 15 du jeu 7 de barres $2a$ s'est déplacé d'une quantité $D/2$ par rapport au bâti 3 tout en restant en appui positif, d'une part, sur le roulement $17a$ du ressort 17 et, d'autre part, sur le roulement $19a$ de l'appui inversé 19. En revanche, l'organe de soutien 16 du jeu 8 de barres $2b$ s'est déplacé d'une quantité $d/2$, tout en restant en appui positif sur le roulement $18a$ du ressort 18, mais en s'écartant progressivement vers le bas du roulement $20a$ de l'appui inversé 20 jusqu'à atteindre un écart maximal identique à l'écart maximal des barres $2a$ et $2b$, soit $D/2-d/2$.

Entre la position de la figure 3 et celle de la figure 4, on a provoqué la rotation des disques 10 et 12 d'un quart de tour autour de leur centre $10a$ et $12a$ jusqu'à se retrouver dans la position de la phase c) du cycle de progression de la charge 6 décrit plus haut. Les barres $2a$ du jeu 7, porteur seul de la charge 6, ont avancé d'une valeur totale égale au diamètre $D$ du plus grand disque 10, le châssis 13 ainsi que le jeu 8 de barres $2b$ étant par ailleurs remontés jusqu'à leur position de la figure 2. Les deux jeux 7 et 8 de barres $2a$ et $2b$ se retrouvent, par conséquent, au niveau haut de référence, mais, à l'inverse de la position de la figure 2, les points de connexion $9a$ et $11a$ des organes de liaisons 9 et 11, reliant les disques 10 et 12 aux barres $2a$ et $2b$ respectivement, sont éloignés l'un de l'autre d'une distance minimale égale à l'entraxe des centres $10a$ et $12a$ des disques 10 et 12, auquel il convient de retrancher leur demi-diamètre respectif, à savoir $D/2$ et $d/2$.

Entre la position de la figure 4 et celle de la figure 5, on a provoqué la rotation des disques 10 et 12 d'un quart de tour autour de leur centre $10a$ et $12a$ pour se retrouver dans la position intermédiaire de la phase d) du cycle de progression de la charge 6 décrit plus haut. Ainsi qu'on l'a déjà expliqué, la rotation synchrone et en sens inverse des disques 10 et 12 a tout d'abord tendance à faire descendre les points de connexion $9a$ et $11a$ par rapport aux centres $10a$ et $12a$, respectivement de $D/2$ et de $d/2$. Or, étant donné que le châssis mobile 13 reliant les centres $10a$ et $12a$ reste strictement horizontal, les deux ressorts 17 et 18, qui auraient tendance à s'écraser d'une valeur égale au plus grand des deux abaissements, soit $D$, en sont empêchés par la coopération desdits ressorts 17 et 18 contre leur appui inversé 19 et 20 respectif, ces derniers se trouvant invariablement à la hauteur constante $H3$ ; le ressort 18 repousse donc l'organe de soutien rigide 16 vers le haut, au contact du roulement $20a$ de l'appui inversé 20, l'empêche ainsi de descendre, tout en maintenant également à une hauteur constante le point de connexion $11a$ de l'organe de liaison 11 rigide, situé entre le petit disque 12 et le jeu 8 de barres $2b$. Par conséquent, le jeu 8 demeure au niveau haut défini par la somme des hauteurs $H2+H3$ durant toute la phase d) du mouvement.

Il ressort par conséquent du mécanisme précédent que, si le point de connexion $11a$ ne peut s'abaisser, il faut bien que le centre $12a$ du petit disque 12 monte, entraînant avec lui la montée verticale du châssis mobile 13, et donc celle du centre 10a du grand disque 10, d'une même valeur, à savoir $d/2$ à son maximum. Comme corrélativement le point de connexion 9a doit progressivement descendre de $D/2$ au dessous du centre 10a, il est immédiat de se rendre compte que, les organes de liaison 9 et de soutien 15 étant rigides, le ressort 17 leur correspondant est plus comprimé que le ressort 18 d'une valeur égale au maximum à $D/2-d/2$ ; cet écrasement dudit ressort 17 provoque, vu la hauteur imposée et constante de l'appui inversé 19, à savoir $H3$, le décollement vers le bas de l'organe de soutien 15 qui s'écarte donc progressivement du contact du roulement 19a. De même, il est clair que, dans cette phase du mouvement, seul le jeu 8 de barres 2b porte la charge 6 puisque le point de connexion 9a de l'organe de liaison rigide 9 entre la barre 2a et le grand disque 10 se retrouve à un niveau inférieur d'une valeur de $D/2-d/2$ au niveau du point de connexion 11a de l'organe de liaison 11 situé entre la barre 2b et le petit disque 12.

En outre, durant cette phase, le jeu 8 de barres 2b a progressé d'une distance égale à $d/2$, correspondant au déplacement horizontal du point de connexion 11a, ce déplacement étant encore parfaitement rectiligne puisque toute tendance à un déplacement vertical a été compensé par la remontée immédiate du châssis mobile 13. Pendant ce temps, le jeu 7 de barres 2a qui a été escamoté vers le bas d'une valeur atteignant $D/2-d/2$ à son maximum subit un mouvement de recul inverse du mouvement d'avancement du jeu 8 des barres 2b, sur une distance égale à $D/2$.

En poursuivant le mouvement jusqu'à provoquer la rotation complète des deux disques 10 et 12, on retrouve exactement la position de la figure 2, la charge 6 ayant cependant progressée d'une manière strictement rectiligne sur une distance totale égale à la somme des diamètres des deux disques, soit $D+d$. Le cycle des quatre phases précédentes peut alors recommencé, provoquant le déplacement de la charge 6.

Il ressort de la description précédente qu'il est donc possible d'aboutir d'une manière simple, c'est-à-dire avec relativement peu de constituants mécaniques, à faire progresser une charge 6 même lourde sans pour autant la soulever au dessus de son niveau d'origine.

On notera également, à titre d'exemple non limitatif d'une mise en oeuvre mécanique des principes cinématiques décrits en référence aux figures 2 à 5, que l'on peut relier les paliers d'entraînement des disques 10 et 12 par un système à engrenages non représenté sur les figures et comportant deux roues dentées identiques, de diamètre égal à l'entraxe des disques 10 et 12 et de mêmes axes que les centres 10a et 12a desdits disques 10 et 12 ; ces deux roues dentées assurent la transmission synchrone du mouvement de rotation du grand disque 10 vers le petit disque 12, ce mouvement étant fourni par ailleurs par un moto-réducteur, ou bien encore par un moteur à fort couple.

En outre, il est évident que chaque jeu 7 ou 8 de barres 2 est soutenu à chacune de ses extrémités par un ensemble constitué d'un appui inversé 19, 20 et d'un ressort 17, 18, les entraînements des disques 10 et 12 leur correspondant étant synchronisés d'une manière simple au moyen d'un organe de transmission, par exemple à chaîne ou à courroie reliant un même moto-réducteur aux roues dentées équipant lesdits disques 10 et 12.

Dans une autre variante de réalisation, on pourrait disposer les points de connexion 9a et 11a de telle manière qu'ils ne soient plus en opposition de phase, voire coordonner les mouvements de trois jeux de barres simultanément, ce qui nécessiterait bien sûr trois disques de diamètres différents, tournant dans des sens à déterminer en fonction de la progression cinématique souhaitée ; dans cette hypothèse, les centres des trois disques sont toujours reliés à un châssis mobile présentant un mouvement strictement guidé dans le sens vertical. Pour un nombre pair de jeux de barres, il est, en revanche, plus simple d'organiser les jeux de barres par paires en doublant les mécanismes précédents (deux pour quatre, trois pour six, etc). On notera également que l'on peut remplacer les disques procurant leur mouvement aux barres par des cames ou des excentriques plus ou moins complexes, ou encore par tout mécanisme équivalent à ces cames ou excentriques.

A cet égard, on décrira maintenant un deuxième mode de réalisation des organes d'entrainement des barres 2a, 2b des deux jeux 7, 8, dont les figures 6 à 9 sont des schémas de principe cinématique correspondant successivement à quatres phases du déplacement des barres 2. Sur ces figures, on a repris la nomenclature des figures 2 à 5 dès lors que des éléments identiques sont utilisés dans les deux variantes. La présente variante vise à améliorer le mode d'avancement lent et intermittent de la charge 6 tel que décrit dans la première variante.

Dans cette variante, on a substitué, au grand disque 10 assujetti au jeu 7 de barres 2a, un mécanisme excentrique complexe formé par l'assemblage solidaire de ce même grand disque 10 et d'une came 21 de même centre de rotation 10a ; par ailleurs, ladite came 21 est maintenue en appui positif contre une poulie d'appui 22 fixe par le biais d'un moyen élastique 23 travaillant en compression entre le châssis mobile 13 et le bâti 3 de l'appareil transporteur 1. De ce fait, la glissière 14 solidaire du bâti 3 (fig. 2) pour assurer le guidage vertical du châssis mobile 13 est supprimée, ce dernier pouvant ainsi se déplacer aussi bien horizontalement que verticalement. Enfin, le chantournement extérieur et les dimensions de la came 21 sont choisis en fonction des paramètres géométriques des disques 10 et 12, de l'entraxe de la poulie 22 et du centre 10a et, bien entendu, de la cinétique que l'on veut imposer aux deux jeux 7 et 8 des barres parallèles 2.

Afin de mieux comprendre cette seconde variante de l'invention, on se reportera maintenant aux figures 10 et 11 ; la figure 10 est une courbe schématisant le déplacement du point de connexion $9a$, $10a$ de l'organe de liaison 9, 10 reliant le jeu 7, 8 de barres 2 le plus haut au disque 10, 12 lui correspondant, ce déplacement étant relatif au centre de rotation $10a$, $12a$ dudit disque 10, 12. La figure 11 est une représentation approximative de la came 21 coopérant avec la poulie d'appui 22. Sur la courbe de la figure 10, on a représenté en abcisse un ensemble de 32 positions successives de la charge 6 au cours d'un cycle complet d'avancement des barres parallèles 2, ce déplacement étant régulier et s'effectuant d'une manière continue à une vitesse constante. En ordonnée, on a reporté les déplacements angulaires des deux disques 10 et 12 correspondant aux 32 positions horizontales de la charge 6, les pas d'avancement de la charge 6 étant, par conséquent, égaux aux projections des 32 arcs de cercle ainsi déterminés sur l'axe des abscisses. Selon la présente invention, une rotation de la came 21 provoque, ladite came 21 se trouvant en appui constant sur la poulie fixe 22, un déplacement horizontal du châssis mobile 13 venant s'ajouter ou se retrancher au déplacement horizontal variable des points de connexion $9a$, $10a$ des organes de liaison 9, 10 sur la circonférence des disques 10, 12, ces derniers étant animés de mouvements de rotation contrarotatifs de même fréquence que la fréquence de rotation de ladite came 21 autour du centre $10a$. La combinaison du déplacement horizontal du châssis 13 et des barres 2 par rapport à ce même châssis 13 permet alors d'obtenir, en particulier, un déplacement horizontal à vitesse constante des barres 2 par rapport au bâti 3 fixe de l'appareil transporteur 1. La forme de la came 21 ainsi calculée est reportée sur la figure 11. Il va de soi que la forme représentée est approximative et qu'un calcul détaillé sur un nombre de pas beaucoup plus important permet de réaliser la came 21 avec une grande précision (par exemple, sur une machine à commande numérique).

On notera, sur la figure 10, que la première moitié du cycle du déplacement de la charge 6 correspond à l'avancement des barres $2a$ du jeu 7, le demi-cercle figuré présentant ainsi un diamètre égal à $D$ correspondant au diamètre du disque 10 ; la seconde partie de la courbe, d'un diamètre égal à $d$, correspond à la fin du cycle d'avancement de la charge 6 qui est gouvernée par le petit disque 12. En conséquence, dans le cas préféré d'un avancement continu des barres 2 à vitesse constante, on démontre aisément que la relation arithmétique suivante doit être vérifiée pour tout le cycle :

$$(r_{i+1} - r_i) + (l_{i+1} - l_i) = 0$$

i variant entre 0 et (n-1), avec n le nombre de pas égaux effectués par les disques 10 et 12 pour tourner d'un tour ;

avec $r_i$ la longueur du rayon de la came 21 numéroté i sur la figure 11 ;

et avec, dans la première moitié du cycle,

$$(l_{i+1} - l_i) = \frac{D}{2} [\cos(\pi - 2(i+1)\pi/n) - \cos(\pi - 2i\pi/n)]$$

où $l_i$ est la projection horizontale, par rapport au centre $10a$ de diamètre $D$, de l'arc de cercle correspondant à la rotation du disque 10 entre une position numérotée i sur la figure 10 et sa position numérotée n/4 ; cette variable $l_i$ représente le déplacement horizontal algébrique du jeu 7 de barres $2a$ entre ces deux positions ;

et, dans la seconde moitié du cycle,

$$(l_{i+1} - l_i) = \frac{d}{2} [\cos(\pi - 2(i+1)\pi/n) - \cos(\pi - 2i\pi/n)]$$

où $l_i$ est ici la projection horizontale, par rapport au centre $12a$ de diamètre $d$, de l'arc de cercle correspondant à la rotation du disque 12 entre une position numérotée i et sa position numérotée 3n/4 sur la figure 10 ; cette variable $l_i$ représente le déplacement horizontal algébrique du jeu 8 de barres $2b$ entre ces deux positions.

Ainsi, à une variation $(l_{i+1} - l_i)$ du déplacement relatif des barres 2 par rapport au châssis 3 correspond toujours une variation $(r_{i+1} - r_i)$ du rayon de la came 21 telle que la somme de ces deux variations soit nulle pour un déplacement à vitesse constante desdites barres 2 par rapport au bâti 3. Ces relations suffisent à déterminer parfaitement la came 21, des relations analogues pouvant être établies pour les autres cas particuliers où l'on souhaiterait un déplacement autre que continu des barres 2.

Par exemple, on pourrait tout à fait obtenir, dans cette seconde variante de l'invention, un déplacement des barres parallèles $2a$, $2b$ des deux jeux 7, 8 qui soit strictement identique à celui procuré par le système mécanique de la première variante ; il suffirait alors de calculer le profil de la came 21 d'une manière semblable à celle décrite plus haut pour des déplacements successifs égaux (on remarquera qu'il ne suffit d'ailleurs pas, dans ce cas, que la came 21 soit circulaire étant donné qu'elle est animée de mouvements verticaux solidairement avec le châssis mobile 13).

A titre plus général, il va ainsi de soi qu'on pourrait tout à fait substituer un engrenage par friction à rapport de transformation continûment variable à l'ensemble constitué par la came 21, la poulie d'appui 22 et le moyen élastique 23.

On se reportera maintenant aux figures 6 à 9. La position représentée sur la figure 6 correspond à une orientation de la came 21 pour laquelle le rayon numéroté $r0$ sur la figure 11 se trouve à l'horizontale. A cet instant, l'ensemble constitué par le châssis mobile 13 et les barres $2a$, $2b$ coulissent horizontalement sur les roulements à billes $17a$, $18a$, $19a$ et $20a$ ménagés aux extrémités des ressorts 17 et 18 et des appuis inversés 19 et 20. La came 21 est en train de tourner et toutes les barres 2 sont en mouvement, contrairement à la position de la figure 2 correspondant à la première variante pour laquelle la charge est fixe.

Pour passer à la position de la figure 7, la came 21 a poursuivi sa rotation pour amener à l'horizontale le rayon numéroté r8 sur la figure 11. A cet instant, la charge se trouve encore en mouvement, la charge 6 se trouvant exactement au quart de sa course, soit ($\underline{\underline{D}}$ + $\underline{d}$)/4 ; on rappelle que dans le cas correspondant à la figure 3 relative à la première variante, cette position correspondait à un déplacement de la charge 6 égal à $\underline{D}$/2, avec une vitesse maximale de la charge. Du fait de la coopération de la came 21, de la poulie fixe 22 et du moyen élastique 23, l'accélération de la charge 6 est nulle tout au long de son déplacement, sa vitesse étant par conséquent constante.

Pour atteindre la position de la figure 8, on a fait tourner la came 21 et le disque 10 d'un nouveau quart de tour de sorte à amener à l'horizontale le rayon numéroté r16 sur la figure 11. La charge 6 se trouve encore en mouvement à l'inverse de la position de la figure 4 relative à la même rotation du disque 10 selon la première variante. La charge 6 se trouve alors à mi-course, soit à une distance égale à ($\underline{D}$ + $\underline{d}$)/2, de son point d'origine, au lieu d'en être à $\underline{D}$. On constate donc que la charge 6 est globalement ralentie sur la première moitié de son trajet.

Enfin, sur la figure 9, la charge 6 est également en mouvement et se situe aux trois quarts de sa course maximale correspondant à une rotation complète des disques 10 et 12. Dans cette position, le rayon numéroté r24 sur la figure 11 est placé à l'horizontale.

Il convient de noter que, étant donné les mouvements verticaux du châssis mobile 13 - qui sont identiques dans les deux variantes -, le point de contact entre la poulie d'appui 22 et la came 21 n'est pas toujours situé suivant un rayon horizontal passant par le centre 10a mais qu'il se déplace de haut en bas et réciproquement avec le châssis 13.

## Revendications

1. Appareil transporteur à plancher mobile comportant au moins deux jeux (7, 8) alternés de barres (2, 2a, 2b) parallèles sur lesquelles repose la charge (6) à transporter, cet appareil transporteur étant caractérisé en ce que, d'une part, des organes de liaison (9, 11) et de soutien (15, 16) rigides relient les jeux (7, 8) de barres (2, 2a, 2b) à deux mécanismes excentriques (10, 12, 21) différents, d'entraxe fixe, tournant normalement dans des sens contrarotatifs autour de leur centre de rotation respectif (10a, 12a) à des fréquences préférentiellement identiques, de manière à ce que lesdits jeux (7, 8) soient animés alternativement de mouvements respectifs d'avancement et de recul à des niveaux haut et bas distincts, et en ce que, d'autre part, lesdits organes de soutien (15, 16) sont sollicités vers le haut par des ressorts (17, 18) en appui sur le bâti (3) de l'appareil transporteur (1) et ramenant alternativement l'organe de soutien (15, 16) correspondant au jeu (7, 8) de barres (2, 2a, 2b) le plus haut en butée positive contre des appuis inversés (19, 20) fixes de niveau constant.

2. Appareil transporteur selon la revendication 1, caractérisé en ce que, d'une part, les mécanismes excentriques (10, 12, 21) sont constitués par des disques (10, 12) de diamètres différents ($\underline{D}$, $\underline{d}$) entraînant, au niveau de points de connexion (9a, 11a) situés sur leur circonférence, les organes de liaison (9, 11) reliant respectivement le grand disque (10) et le petit disque (12) aux barres (2a) du jeu (7) et aux barres (2b) du jeu (8), et en ce que, d'autre part, les centres de rotation (10a, 12a) desdits disques (10, 12) sont reliés à un châssis mobile (13) guidé dans une glissière (14) suivant un mouvement strictement vertical.

3. Appareil transporteur selon l'une quelconque des revendications 1 ou 2, caractérisé en ce que les points de connexion (9a, 11a) des organes de liaison (9, 11), reliant respectivement le grand disque (10) et le petit disque (12) aux barres (2a) du jeu (7) et aux barres (2b) du jeu (8), sont placés en opposition l'un par rapport à l'autre sur leur disque (10, 12) respectif, ce qui permet d'éviter que la charge (6) ne se retrouve, à un moment donné, en appui sur un jeu (7, 8) de barres (2, 2a, 2b) présentant un mouvement de recul.

4. Appareil transporteur selon la revendication 1, caractérisé en ce que les mécanismes excentriques (10, 12, 21) sont constitués, d'une part, par un disque (12) de diamètre ($\underline{d}$) entraînant, au niveau d'un point de connexion (12a) situé sur sa circonférence, l'organe de liaison (11) reliant ledit disque (12) aux barres (2b) du jeu (8), et, d'autre part, par l'assemblage d'un disque (10) de diamètre ($\underline{D}$) et d'une came (21) tournant solidairement autour d'un même centre de rotation (10a) qui est relié, par un châssis mobile (13), au centre de rotation (12a) dudit disque (12), ladite came (21) étant maintenue en appui positif contre une poulie d'appui (22) fixe par le biais d'un moyen élastique (23) travaillant en compression entre ledit châssis mobile (13) et le bâti (3) de l'appareil transporteur (1).

5. Appareil transporteur selon la revendication 4, caractérisé en ce que la came (21) présente un profil angulaire tel que, en tournant à vitesse constante autour du centre de rotation (10a), elle procure un mouvement alternatif horizontal au châssis mobile (13), éloignant ou rapprochant alternativement ledit centre de rotation (10a) de la poulie d'appui (22) de sorte à ce que la combinaison du déplacement ainsi imprimé audit châssis mobile (13) avec le déplacement horizontal alternativement accéléré et décéléré des barres (2) par rapport aux centres de rotation (10a, 12a) des disques (10, 12), tournant en sens inverse à des vitesses identiques à celle de ladite came (21), procure un déplacement horizontal à vitesse constante desdites barres (2) par rapport au bâti (3) de l'appareil transporteur (1).

6. Appareil transporteur selon la revendication 5, caractérisé en ce qu'à une variation du déplacement horizontal relatif des barres (2) par rapport au châssis mobile (13) correspond une variation du rayon de la came (21) telle que la somme des ces deux variations soit nulle.

7. Appareil transporteur selon l'une quelconque des revendications précédentes, caractérisé en ce que les glissements sans frottement des organes de soutien (15, 16) sur les ressorts (17, 18) d'une part, et sur les appuis inversés (19, 20) d'autre part, sont assurés par des roulements (17a, 18a) et (19a, 20a) respectivement.

**Patentansprüche**

1. Transportvorrichtung mit beweglichem Boden mit mindestens zwei abwechseld angeordneten Gruppen (7, 8) von parallelen Kufen (2, 2a, 2b) auf denen die zu transportierende Last ruht, **dadurch gekennzeichnet,** daß einerseits starre Verbindungs- (9, 11) und Trageeinrichtungen (15, 16) die Gruppen (7, 8) der Kufen (2, 2a, 2b) mit zwei verschiedenen Exzentermechanismen (10, 12, 21) mit festem Achsabstand verbinden, die normalerweise mit gegensätzlicher Drehrichtung mit vorzugsweise gleicher Umdrehungszahl um ihre jeweiligen Drehachsen (10a, 12a) rotieren, derart daß die Gruppen (7, 8) abwechselnd zu Vorwärts- bzw. Rückwärtsbewegungen auf verschiedenen hohen und tiefen Niveaus angeregt werden, und daß andererseits die Trageeinrichtungen (15, 16) durch Federn (17, 18) nach oben belastet sind, die sich auf dem Bett (3) der Transportvorrichtung abstützen und abwechselnd die zur Gruppe (7, 8) der Kufen (2, 2a, 2b), die sich am oberen Anschlag befindet, gehörige Trageeinrichtung (15, 16) gegen umgekehrte und auf konstantem Niveau befestigte Auflager (19, 20) zurückführen.

2. Transportvorrichtung nach Anspruch 1, **dadurch gekennzeichnet,** daß einerseits die Exzentermechanismen (10, 12, 21) durch Scheiben (10, 12) unterschiedlicher Durchmesser (D, d) gebildet werden, die auf Höhe der auf ihrem Umfang liegenden Verbindungspunkte (9a, 11a) die Verbindungseinrichtungen (9, 11) antreiben, welche jeweils die große Scheibe (10) und die kleine Scheibe (12) mit den Kufen (2a) der Gruppe (7) und mit den Kufen (2b) der Gruppe (8) verbindet, und daß andererseits die Drehachsen (10a, 12a) der Scheiben (10, 12) mit einem beweglichen Rahmen (13), der in einer nur eine vertikale Bewegung erlaubenden Gleitführung läuft, verbunden sind.

3. Transportvorrichtung nach einem der Ansprüche 1 oder 2, **dadurch gekennzeichnet,** daß die Verbindungspunkte (9a, 11a) der Verbindungseinrichtungen (9, 11), welche jeweils die große Scheibe (10) und die kleine Scheibe (12) mit den Kufen (2a) der Gruppe (7) und den Kufen (2b) der Gruppe (8) verbinden, auf ihrer jeweiligen Scheibe (10, 12) einander gegenüberliegend angeordnet sind, um zu vermeiden, daß die Last (6) zu einem bestimmten Zeitpunkt auf einer Gruppe (7, 8) von Kufen (2, 2a, 2b) aufliegt, die gerade eine Rückwärtsbewegung ausführt.

4. Transportvorrichtung nach Anspruch 1, **dadurch gekennzeichnet,** daß die Exzentermechanismen (10, 12, 21) einerseits gebildet werden durch eine Scheibe (12) des Durchmessers (d), die auf Höhe eines auf ihrem Umfang liegenden Verbindungspunktes (12a) die Verbindungseinrichtung (11) antreibt, welche diese Scheibe (12) mit den Kufen (2b) der Gruppe (8) verbindet, und andererseits durch Zusammenbau einer Scheibe (10) von Durchmesser (D) mit einem Nocken (21), welche festverbunden miteinander um dieselbe Drehachse (10a) rotieren, die über einen beweglichen Rahmen (13) mit der Drehachse der Scheibe (12) verbunden ist, wobei der Nocken (21) durch ein elastisches Bauteil, das auf Druck zwischen dem beweglichen Rahmen (13) und dem Bett (3) der Transportvorrichtung arbeitet, auf eine seitlich angebrachte Druckrolle (22) gedrückt wird.

5. Transportvorrichtung nach Anspruch 4, **dadurch gekennzeichnet,** daß der Nocken (21) ein solches Umfangsprofil aufweist, daß er bei Drehung um die Drehachse (10a) mit konstanter Geschwindigkeit dem beweglichen Rahmen (13) eine zusätliche horizontale Bewegung erteilt, indem er abwechselnd die Drehachse (10a) von der Druckrolle (22) entfernt oder an diese annähert, sodaß die Kombination der auf diese Art erzwungenen Verschiebung des beweglichen, Rahmens (13) mit der abwechselnd beschleunigten und verzögerten Horizontalbewegung der Kufen (2) bezüglich der Drehachsen (10a, 12a) der sich mit entgegengesetzter Richtung mit gleicher Geschwindigkeit wie der Nocken (21) drehenden Scheiben (10, 12), eine mit gleicher Geschwindigkeit erfolgende Horizontalverschiebung der Kufen (2) gegenüber dem Bett der Transportvorrichtung ergibt.

6. Transportvorrichtung nach Anspruch 5, **dadurch gekennzeichnet,** daß eine Änderung der relativen Horizontalverschiebung der Kufen (2) gegenüber dem beweglichen Rahmen (13) mit einer Radiusänderung des Nockens (21) korrespondiert, sodaß sich die Summe der beiden Änderungen zu Null ergibt.

7. Transportvorrichtung nach einem der vorhergehenden Ansprüche, **dadurch gekennzeichnet,** daß das reibungsfreie Gleiten der Trageeinrichtungen (15, 16) auf den Federn (17, 18) einerseits, bzw. den umgekehrten Auflagern (19, 20) andererseits durch Wälzlager (17a, 18a) bzw. (19a, 20a) sichergestellt wird.

**Claims**

1. Conveyor apparatus with mobile flooring comprising at least two alternate sets (7, 8) of parallel bars (2, 2a, 2b) on which rests the load (6) to be conveyed, this conveyor apparatus being characterized in that, on the one hand, rigid connecting members (9, 11) and supporting members (15, 16) connect the sets (7, 8) of bars (2, 2a, 2b) to two different eccentric mechanisms (10, 12, 21), whose distance between axes is fixed, rotating normally in opposite directions of rotation about their respective centre of rotation (10a, 12a) at preferably identical frequencies, so that said sets (7, 8) are animated alternately by respective advance and return movements at distinct high and low levels, and in that, on the other hand, said support members (15, 16) are urged upwardly by springs (17, 18) in abutment on the frame (3) of the conveyor apparatus (1) and alternately returning the support member (15, 16) corresponding to the highest set (7, 8) of bars (2, 2a, 2b) into positive abutment against fixed inverse bearings (19, 20) of constant level.

2. Conveyor apparatus according to Claim 1, characterized in that, on the one hand, the eccentric mechanisms (10, 12, 21) are constituted by discs (10, 12) of different diameters (D, d) driving, at the level of points of connection (9a, 11a) located on their circumference, the connecting members (9, 11) respectively connecting the large disc (10) and the small disc (12) to the bars (2a) of the set (7) and to the bars (2b) of the set (8), and in that, on the other hand, the centres of rotation (10a, 12a) of said discs (10, 12) are connected to a mobile chassis (13) guided in a slideway (14) in a strictly vertical movement.

3. Conveyor apparatus according to either one of Claims 1 or 2, characterized in that the points of connection (9a, 11a) of the connecting members (9, 11), respectively connecting the large disc (10) and the small disc (12) to the bars (2a) of the set (7) and to the bars (2b) of the set (8), are placed in opposition with respect to each other on their respective disc (10, 12), which makes it possible to avoid the load (6) being, at a given instant, in abutment on a set (7, 8) of bars (2, 2a, 2b) presenting a return movement.

4. Conveyor apparatus according to Claim 1, characterized in that the eccentric mechanisms (10, 12, 21) are constituted, on the one hand, by a disc (12) of diameter (d) driving, at the level of a point of connection (12a) located on its circumference, the connecting member (11) connecting said disc (12) to the bars (2b) of the set (8) and, on the other hand, by the assembly of a disc (10) of diameter (D) and a cam (21) rotating together about the same centre of rotation (10a) which is connected, by a mobile chassis (13), to the centre of rotation (12a) of said disc (12), said cam (21) being maintained in positive abutment against a fixed bearing pulley (22) via an elastic means (23) working in compression between said mobile chassis (13) and the frame (3) of the conveyor apparatus (1).

5. Conveyor apparatus according to Claim 4, characterized in that the cam (21) presents an angular profile such that, by rotating at constant speed about the centre of rotation (10a), it procures a horizontal reciprocating movement for the mobile chassis (13), alternately moving said centre of rotation (10a) away from or towards the bearing pulley (22) so that the combination of the displacement thus imparted to said mobile chassis (13) with the alternately accelerated and decelerated horizontal displacement of the bars (2) with respect to the centres of rotation (10a, 12a) of the discs (10, 12), rotating in opposite direction at speeds identical to that of said cam (21), procures a horizontal displacement at constant speed of said bars (2) with respect to the frame (3) of the conveyor apparatus (1).

6. Conveyor apparatus according to Claim 5, characterized in that, to a variation of the relative horizontal displacement of the bars (2) with respect to the mobile chassis (13), there corresponds a variation of the radius of the cam (21) such that the sum of these two variations is zero.

7. Conveyor apparatus according to any one of the preceding Claims, characterized in that the frictionless slidings of the support members (15, 16) on the springs (17, 18) on the one hand, and on the inverse bearings (19, 20) on the other hand, are ensured by roller bearings (17a, 18a) and (19a, 20a), respectively.

Fig 1a

Coupe AB

Fig 1b

_Fig 2_

_Fig 3_

_Fig 4_

_Fig 5_

_Fig 6_

$(\underline{D}+\underline{d})/4$   $(\underline{D}/2 - \underline{d}/2)$

_Fig 7_

**Fig 8**

**Fig 9**

16

*Fig 10*

*Fig 11*